# EUROPEAN PATENT SPECIFICATION

(11) **EP 3 965 352 B1**
(45) Date of publication and mention of the grant of the patent: **02.07.2025**
(21) Application number: 20819490.2
(22) Date of filing: 29.05.2020
(51) Int. Cl.: H04L 5/00, H04L 1/16, H04W 28/04, H04W 4/06, H04W 4/40, H04W 4/44, H04W 4/46, G08G 1/16

(54) **INFORMATION TRANSMISSION METHOD AND APPARATUS, STORAGE MEDIUM AND ELECTRONIC APPARATUS**
INFORMATIONSÜBERTRAGUNGSVERFAHREN UND -VORRICHTUNG, SPEICHERMEDIUM UND ELEKTRONISCHE VORRICHTUNG
PROCÉDÉ ET DISPOSITIF DE TRANSMISSION D'INFORMATIONS, SUPPORT D'INFORMATIONS ET DISPOSITIF ÉLECTRONIQUE

(30) Priority: 05.06.2019 CN 201910488435
(43) Date of publication of application: 09.03.2022
(73) Proprietor: ZTE Corporation, Shenzhen, Guangdong 518057 (CN)
(72) Inventor: XU, Hui, Shenzhen, Guangdong 518057 (CN); LU, Chen, Shenzhen, Guangdong 518057 (CN); WANG, Fengwei, Shenzhen, Guangdong 518057 (CN); ZHAO, Xiangmo, Shenzhen, Guangdong 518057 (CN); HUI, Fei, Shenzhen, Guangdong 518057 (CN)
(74) Representative: Canzler & Bergmeier Patentanwälte Partnerschaft mbB
(86) International application number: PCT/CN2020/093249
(87) International publication number: WO 2020/244457

(56) References cited:
- CN-A- 107 295 669
- CN-A- 109 792 594
- CN-A- 109 792 594
- CN-A- 111 082 908
- US-A1- 2023 379 891
- SAMSUNG: "On Physical Layer Procedures for NR V2X", vol. RAN WG1, no. Reno, USA; 20190513 - 20190517, 4 May 2019 (2019-05-04), pages 1 - 16, XP051708976, Retrieved from the Internet <URL:http://www.3gpp.org/ftp/tsg%5Fran/WG1%5FRL1/TSGR1%5F97/Docs/R1%2D1906941%2Ezip> [retrieved on 20190504]
- LG ELECTRONICS: "Feature lead summary for agenda item 7.2.4.1.2 Physical layer procedures", 3GPP DRAFT; R1-1903367 FEATURE LEAD SUMMARY OF PHY PROCEDURE IN NR V2X, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Athens, Greece; 20190225 - 20190301, 26 February 2019 (2019-02-26), Mobile Competence Centre ; 650, route des Lucioles ; F-06921 Sophia-Antipolis Cedex ; France, XP051601043
- SAMSUNG: "Sidelink HARQ Configuration", 3GPP DRAFT; R2-1904805 SIDELINK HARQ CONFIGURATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Xi’an, China; 20190408 - 20190412, 29 March 2019 (2019-03-29), Mobile Competence Centre ; 650, route des Lucioles ; F-06921 Sophia-Antipolis Cedex ; France, XP051693992

## Description

### TECHNICAL FIELD

The present disclosure relates to, but is not limited to, the field of communications.

### BACKGROUND

With the rapid development of economy and society, the car ownership is rapidly increased, and road traffic accidents frequently occur, which has become one of the most important factors influencing public safety in recent years, and the problem of road traffic safety has become one of the basic problems influencing social harmony and improvement of people's livelihood. There is an urgent need to improve the traffic safety in the aspects of technology, policy, education and the like, among which improvement in the safety design of vehicles is an important component.

Technologies for improving vehicle safety are mainly classified into passive safety technology and active safety technology. The passive safety technology is used for protecting personnel and articles inside and outside the vehicle after an accident happens; and the active safety technology is used for preventing and reducing vehicle accidents and avoiding personnel injury. The active safety technology is the focus and trend of modern vehicle safety technology development.

The communication-based collision warning system has becomes a new idea for solving the road traffic safety problem across the globe. Utilizing an advanced wireless communication technology and a new generation information processing technology, the collision warning system realizes real-time information interaction between vehicles and between a vehicle and road side infrastructures, so that each party is notified of the current states (including the location, the speed, the acceleration and the travel path of the vehicle), information on the road environment is acquired, a road danger condition can be cooperatively sensed, various collision warning information can be provided in time, and thus road traffic safety accidents can be avoided.

SAMSUNG: "On Physical Layer Procedures for NR V2X",3GPP DRAFT; R1-1906941 ON PHYSICAL LAYER PROCEDURES FOR NR V2X, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE,vol. RAN WG1, no. Reno, USA; 20190513 - 20190517 4 May 2019 (2019-05-04), pages 1-16, XP051708976, discloses various aspects of sidelink physical layer procedures, including HARQ procedure. CN 109792594 discloses a data transmission method for direct communication between two terminals.

### SUMMARY

The invention is defined by the independent claims. Further embodiments of the invention are defined by the dependent claims.

### BRIEF DESCRIPTION OF DRAWINGS

The drawings described herein are intended to provide a further understanding of the present disclosure, and are intended to be a part of the present disclosure. The exemplary embodiments of the present disclosure and the description thereof are for explaining the present disclosure and do not constitute an undue limitation of the present disclosure. In the drawings:
FIG. 1 is a schematic diagram of V2X in the related art;
FIG. 2 is an architecture diagram of a system for sending a V2X service over a PC5 interface in the related art;
FIG. 3 is a flowchart of an information transmission method according to the present disclosure;
FIG. 4 is a flowchart of another information transmission method according to the present disclosure;
FIG. 5 is a flowchart of a method for sending a PSFCH resource in a unicast scenario according to the present disclosure;
FIG. 6 is a flowchart of a method for sending a PSFCH resource in a multicast scenario according to the present disclosure;
FIG. 7 is a flowchart of a method for configuring a PSFCH resource in mode1 transmission according to the present disclosure;
FIG. 8 is a flowchart of a method for determining a PSFCH resource in mode2 transmission according to the present disclosure;
FIG. 9 is a flowchart of a method for setting PSFCH content by a receiving UE according to the present disclosure;
FIG. 10 is a flowchart of a method for setting a PSFCH time window according to the present disclosure;
FIG. 11 is a block diagram of a system for transmitting a response signal according to the present disclosure;
FIG. 12 is a block diagram of an information transmission apparatus according to the present disclosure;
FIG. 13 is a block diagram of another information transmission apparatus according to the present disclosure; and
FIG. 14 is a block diagram showing hardware configuration of a mobile terminal for performing the information transmission method according to the present disclosure.

### DETAIL DESCRIPTION OF EMBODIMENTS

The disclosure will be described in detail below with reference to the drawings in conjunction with the embodiments. It should be noted that embodiments of the disclosure and features therein may be combined with each other in any manner as long as they are not contradictory.

It should be also noted that terms "first", "second", and the like in the description, claims and drawings of the disclosure are for the purpose of distinguishing similar objects instead of indicating a specific order or sequence.

V2X refers to a technology that provides vehicle information through onboard sensors, onboard terminals and electronic tags, implements Vehicle to Vehicle (V2V), Vehicle to Pedestrian (V2P) and Vehicle to Infrastructure (V2I) interconnection and intercommunication with various communication technologies, and extracts and shares or uses in other manners information on an information network platform, thereby effectively managing and controlling vehicles and providing comprehensive services.

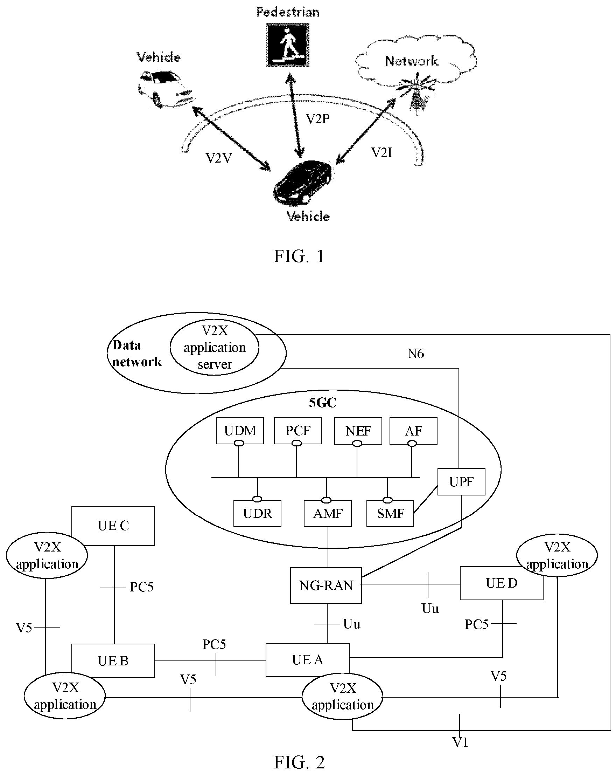

FIG. 1 shows a schematic diagram of V2X.

With the development of new mobile communication technologies in recent years, Long Term Evolution (LTE) and 5G NR (New Radio) have been proposed for the research of applications based on V2X communication.

A Road Side Unit (RSU), which is capable of receiving a vehicle request and ensuring access of the vehicle to the Internet, has a gateway function. In addition, the RSU further has data computation, storage, and transfer functions.

There are currently two techniques for implementation of V2X: Dedicated Short Range Communication (DSRC) and cellular network V2X. DSRC is based on IEEE 802.11P and IEEE 1609 series standards. IEEE 802.11P is responsible for the physical layer and Media Access Control (MAC) technology, while IEEE 1609 is responsible for upper layer specifications. Discussion about the cellular network 5G NR based V2X technology has been just initiated and no standard has been achieved.

In the related art, retransmission is typically used to solve the problem with reliability. To implement transmission, a receiving UE is for sending indication information to a transmitting UE. The indication information is configured to indicate whether the receiving UE correctly receives and decodes a V2X message. According to the indication information, the transmitting UE may perform retransmission of the V2X message.

However, no explicit solution has been proposed in the related art regarding how to transmit the above indication information.

In the related art, NR V2X technology involved in 3GPP includes: V2X that may be implemented over a PC5 interface or Uu interface. The PC5 interface refers to a Device to Device (D2D) air interface. The Uu interface refers to a User Equipment (UE) to gNB air interface.

The architecture of the system for sending a V2X service over a PC5 interface is shown in FIG. 2.

NR V2X supports unicast, groupcast and broadcast transmissions, all three of which may be implemented in-coverage, in-partial-coverage or out-of-coverage. The NR V2X transmission mode includes mode1 and mode2. The mode1 refers to a mode in which the gNB configures the PC5 resource for transmitting the V2X service, and the mode2 refers to a mode in which the UE autonomously selects the PC5 resource for transmitting the V2X service.

In NR V2X, the highest reliability requirement is 99.999%, the minimum delay requirement is 3ms, and NR V2X adopts retransmission at the PC5 interface to solve the reliability problem. In order to realize transmission, the receiving UE is for sending a response signal to the transmitting UE. The response signal is configured to indicate whether the V2X message is correctly received and decoded, and the transmitting UE may retransmit the V2X message according to the indication of the response signal. In order to transmit the response signal, a dedicated physical channel, i.e., a Physical Sidelink Feedback Channel (PSFCH), is designed.

For convenience of description, in the embodiments of the present disclosure, V-UE refers to Vehicle-UE, P-UE refers to Pedestrian-UE, and PC5 and Sidelink have the same meaning, both indicating an air interface link between UEs.

The following problems are found in research and practice of the related art: in the NR V2X topic under study by 3GPP, Hybrid Automatic Repeat reQuest (HARQ) is used to improve reliability of the V2X service, but the implementation scheme of PSFCH has not been determined yet. For example, the content of PSFCH, the resource sending location of PSFCH, a relationship between PSFCH and sending time of the V2X service, and the like, are not yet determined. How to realize the above processing will be described below with reference to the embodiments.

The method of the present disclosure may be applied to V2X services, wearable services, Machine Type Communication (MTC), Public Safety (PS) communication, the Internet of Things (IoT), UE-to-Network relays, and the like.

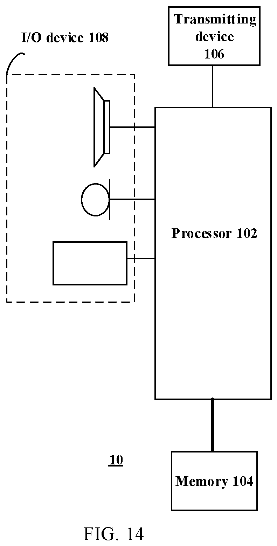

The method provided in the present disclosure may be implemented in hit mobile terminal, a computer terminal or the like. Taking running on a mobile terminal as an example, FIG. 14 is a block diagram showing hardware configuration of a mobile terminal that performs an information transmission method according to the present disclosure. As shown in FIG. 14, a mobile terminal 10 may include one or more (only one is shown in FIG. 14) processors 102 (which may include, but are not limited to, micro processor units (MCUs), programmable logic devices such as FPGAs or other processing devices), and a memory 104 configured to store data. Optionally, the mobile terminal 10 may further include a transmission device 106 for communication functions and an input/output device 108. Those of ordinary skill in the art will understand that the structure shown in FIG. 14 is merely illustrative, and does not form any limitation to the structure of the mobile terminal. For example, the mobile terminal 10 may include more or fewer components than those shown in FIG. 14, or have a different configuration than that shown in FIG. 14.

The memory 104 may be configured to store a computer program, such as software programs of an application software, such as a computer program corresponding to the information transmission method in the present disclosure, and the processor 102 executes the computer program stored in the memory 104 to perform various functional applications and data processing, that is, implement the above method. The memory 104 may include a high speed random access memory and may also include a non-volatile memory such as one or more of magnetic storage device, flash memory, or other non-volatile solid state memory. In some examples, the memory 104 may further include a memory remotely located relative to the processor 102, which may be connected to the mobile terminal 10 over a network. Examples of such network include, but are not limited to, the Internet, intranet, local area network, mobile communication network, and combination thereof.

The transmission device 106 is configured to receive or send data over a network. Specific examples of such network may include a wireless network provided by a communication provider of the mobile terminal 10. In an example, the transmission device 106 includes a Network Interface Controller (NIC) that may be connected to another network device through a base station to communicate with the Internet. In an example, the transmission device 106 may be a Radio Frequency (RF) module configured to communicate with the Internet wirelessly.

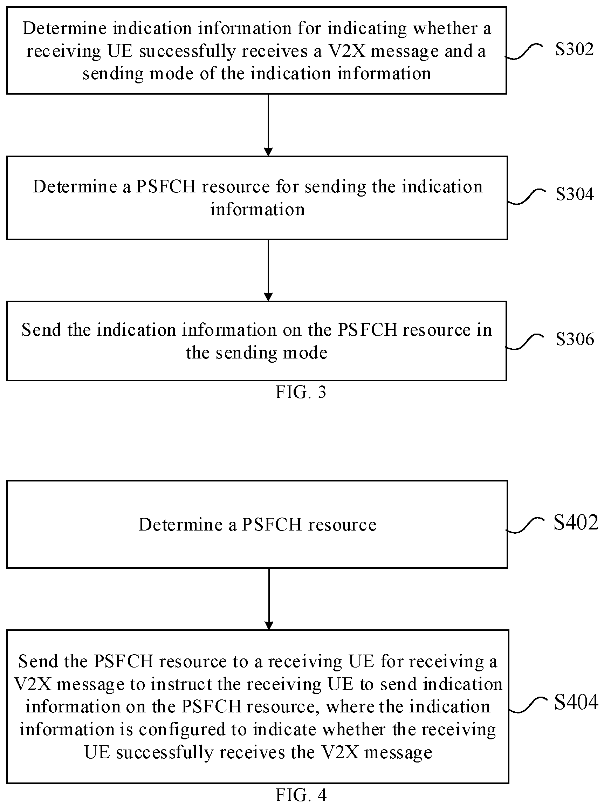

FIG. 3 is a flowchart of an information transmission method according to the present disclosure. In the present disclosure, there is provided an information transmission method that may be executed on the above mobile terminal 10. As shown in FIG. 3, the flow includes the following operations S302 to S306.

At operation S302, determining indication information for indicating whether a receiving UE successfully receives a V2X message and a sending mode of the indication information.

At operation S304, determining a PSFCH resource for sending the indication information.

At operation S306, sending the indication information on the PSFCH resource in the sending mode.

The subject performing the above operations may be the receiving UE. In the present disclosure, the receiving UE and any subsequent transmitting UE may include at least one of: an On Board Unit (OBU), a Road Side Unit (RSU), a User Equipment (UE), a V-UE, a P-UE, a wearable device, a UE-to-Network relay, or an Internet of Things/Manual Toll Collection (IoT/MTC) terminal.

Operations S302 and S304 are not necessarily executed in a particular order. In practical applications, operation S302 may be executed before or after or simultaneously with operation S304.

In the above embodiment, since the indication information, the sending mode of the indication information, and the PSFCH resource for sending the indication information can be determined, and thus the indication information can be sent on the PSFCH resource in the sending mode, a design for the V2X response signal (i.e., the indication information) is realized, so that the requirement for PSFCH signal transmission is satisfied during transmission of the V2X service, reliability of the V2X service is improved, and the problem that no explicit scheme has been proposed regarding how to transmit the indication information in the related art is effectively solved.

In the present disclosure, the operation of determining indication information for indicating whether the receiving UE successfully receives the V2X message and the sending mode of the indication information (i.e., operation S302) includes: determining a decoding state of the V2X, the transmission mode of the V2X and a feedback state of PC5; and determining, based on the decoding state of the V2X, the transmission mode of the V2X and the feedback state of PC5, the indication information for indicating whether the receiving UE successfully receives the V2X message and the sending mode of the indication information.

In the present disclosure, the V2X service may be transmitted in mode1 or mode2, and the receiving UE may configure the content of the PSFCH (i.e., configure the indication information and the sending mode of the indication information) according to the following conditions: the received V2X service data, the transmission mode, and the feedback state of PC5, and may perform processing including at least one of the following.

Processing I: determining, based on the decoding state of the V2X, the indication information for indicating whether the receiving UE successfully receives the V2X message may include: determining, when the decoding state of the V2X is correct decoding, the indication information to be an acknowledgement (Ack) response; and determining, when the decoding state of the V2X is not correct decoding, the indication information to be a negative acknowledgement (Nack) response. That is, if the received V2X service data can be decoded correctly, the Ack response is set; otherwise the Nack response is set.

Processing II: determining, based on the transmission mode of the V2X, the sending mode of the indication information for indicating whether the receiving UE successfully receives the V2X message may include: determining, when the transmission mode of the V2X is unicast transmission, that the sending mode of the indication information includes sending, when the indication information is the Ack response, the Ack response to the transmitting UE, and sending, when the indication information is an Nack response, the Nack response to the transmitting UE; and sending, when the transmission mode of V2X is groupcast transmission and when the indication information is the Nack response, the Nack response to the transmitting UE. That is, the Ack or Nack response is set when the transmission mode is unicast transmission, and the Nack response is set when the transmission mode is groupcast transmission. In the present disclosure, for groupcast transmission, in order to reduce loads on the response signal while considering that the probability of the Nack response is smaller than that of the Ack response, only the Nack response may be sent. That is, a response is sent only when the V2X service data is not received correctly, and the Ack response is not sent when the data is received correctly.

It should be noted that, in practical applications, both Ack and Nack responses may be sent in groupcast transmission. That is, an Ack response is sent upon correct reception, and a Nack response is sent upon incorrect reception. In this processing method, the processing of determining, based on the transmission mode of the V2X, the sending mode of the indication information for indicating whether the receiving UE successfully receives the V2X message (i.e., processing II) may include: determining, when the transmission mode of the V2X is groupcast transmission, that the sending mode of the indication information includes sending, when the indication information is the Ack response, the Ack response to the transmitting UE, and sending, when the indication information is the Nack response, the Nack response to the transmitting UE.

Processing III: determining, based on the PC5 feedback state, the sending mode of the indication information for indicating whether the receiving UE successfully receives the V2X message may include: executing, when the PC5 feedback state is an activated state, determination of the sending mode of the indication information for indicating whether the receiving UE successfully receives the V2X message. The PC5 feedback state includes activated and inactivated. When the PC5 feedback is activated, the PSFCH content is set, and when the PC5 is inactivated, the PSFCH content is not set.

In the present disclosure, the operation of sending the indication information on the PSFCH resource in the sending mode (i.e., operation S306) includes: sending on the PSFCH resource in the sending mode the indication information and at least one of: a process ID indicating an order of the V2X message being transmitted over a PC5 interface; an ID of the transmitting UE for sending the V2X message; or an ID of the receiving UE.

In the present disclosure, considering that the V2X service may be retransmitted for many times, a process ID may be included in the PSFCH content to indicate an order of the V2X service being transmitted by the PC5. To distinguish different transmitters and receivers, a source ID and a destination ID may be included in the PSFCH content, and in groupcast transmission, the destination ID is a groupcast group ID. It should be noted that, in the present disclosure, the indication information and the process ID, the source ID, and the destination ID described above may together constitute the PSFCH content, and the PSFCH content appearing in any subsequent embodiments may include at least one of the indication information, the process ID, the source ID, or the destination ID.

In the present disclosure, the receiving UE may set the PSFCH content according to indication information from a gNB, or may autonomously set the PSFCH content.

In the present disclosure, the operation of sending the indication information on the PSFCH resource in the sending mode (i.e., operation S306) includes: configuring a transmission timer for the indication information, and sending the indication information before the timer expires and when the PSFCH resource exists.

In the present disclosure, the operation of determining the PSFCH resource for sending the indication information (i.e., operation S304) includes at least one of: acquiring a PSFCH resource indicated by the transmitting UE for sending the V2X message; acquiring a PSFCH resource configured by a base station; selecting a PSFCH resource from a resource pool broadcasted by a 5G base station gNB; or selecting a PSFCH resource from a pre-configured resource pool. In the present disclosure, the transmitting UE may indicate the location information of the PSFCH resource to the receiving UE, or the receiving UE may obtain the location of the PSFCH resource through a system broadcast message or a pre-configured resource pool. For the latter, the receiving UE may notify the transmitting UE of the acquired location information of the PSFCH resource. In the present disclosure, the PSFCH resource may also be configured by an eNB.

In the present disclosure, the PSFCH resource includes resources with the same frequency domain and code domain configured on the same time interval, and the PSFCH resource is located in the same resource pool as a resource for the V2X service corresponding to the V2X message.

In the present disclosure, the operation of sending the indication information on the PSFCH resource in the sending mode (i.e., operation S306) includes: judging whether the feedback state of the PC5 is an activated state; sending, when the feedback state of the PC5 is the activated state, the indication information on the PSFCH resource in the sending mode; and stopping, when the feedback state of the PC5 is the inactivated state, the processing of sending the indication information on the PSFCH resource in the sending mode. In the present disclosure, whether the receiving UE performs transmission through the PSFCH (including whether to set PSFCH content, i.e., determine the indication information, and whether to acquire the PSFCH resource) may be determined by whether the feedback state of the PC5 is the activated state: when the feedback state of the PC5 is the activated state, the receiving UE determines to perform transmission through the PSFCH, otherwise, the receiving UE does not perform transmission through the PSFCH. In the present disclosure, performing transmission through the PSFCH includes the specific operations of: 1) activating the PC5 feedback; 2) notifying the receiving UE; 3) setting the PSFCH content by the receiving UE; 4) acquiring the PSFCH resource by the receiving UE; 5) performing transmission through the PSFCH by the receiving UE.

In the present disclosure, the method further includes: determining whether the PC5 feedback is activated by at least one of: determining information, which is notified by the transmitting UE for sending the V2X message over PC5, for indicating whether the PC5 feedback is activated; receiving a first broadcast message from a gNB, and determining information, which is carried in the first broadcast message, for indicating whether the PC5 feedback is activated; or determining information, according to a state of a PSFCH resource pool, for indicating whether the PC5 feedback is activated. In the present disclosure, when determining information for indicating whether the PC5 feedback is activated according to the state of the PSFCH resource pool, if the PSFCH resource pool is empty, it indicates that the PC5 feedback is not activated; otherwise, it indicates that the PC5 feedback is activated.

In the present disclosure, the operation of sending the indication information on the PSFCH resource in the sending mode (i.e., operation S306) includes: determining a time interval for sending the V2X message and the indication information; and sending the indication information on the PSFCH resource according to the time interval in the sending mode.

In the present disclosure, the operation of determining the time interval for sending the V2X message and the indication information may include: determining a pre-configured time interval; or receiving a second broadcast message from the gNB, and acquiring the time interval carried in the second broadcast message.

In the above embodiment, in order to reduce waiting delay of the transmitting UE, a time interval between the response signal (i.e., the indication information) and the corresponding V2X service data (i.e., the V2X message) may be configured. That is, the transmitting UE waits for a time interval after sending the V2X service data before detecting reception of the response signal. The time interval may be configured by the gNB and sent through a broadcast message, or may be pre-configured and stored in the UE (including the transmitting UE and/or the receiving UE).

In the present disclosure, the operation of sending the indication information on the PSFCH resource according to the time interval in the sending mode may include: sending the indication information on the PSFCH resource in the sending mode at least twice within the time interval. In the present disclosure, the receiving UE sends a preset PSFCH content (i.e., the indication information). In order to meet the delay requirements of the V2X service, a time window (or a timer) for PSFCH transmission needs to be set. That is, the preset PSFCH content is sent within certain time after the V2X service (i.e., the V2X message) is received, and in order to guarantee reliability, the PSFCH content may be sent for multiple times within the time window. The PSFCH time window may be configured by the gNB, or may be pre-configured and acquired by all UEs participating in the V2X response procedure.

In the present disclosure, the PSFCH resource includes: a time domain resource, a frequency domain resource, and a code domain resource.

In the present disclosure, the PSFCH resource includes at least one of: the time domain resource configured by a base station or the transmitting UE for sending the V2X message; the frequency domain resource including at least one of: a frequency domain resource consistent with a frequency domain resource for the V2X service corresponding to the V2X message, or a frequency domain resource adjacent to the frequency domain resource for the V2X service corresponding to the V2X message; or the code domain resource including at least one of: a code domain resource assigned by the gNB, or a pre-configured code domain resource. In the present disclosure, the time domain resource (or time domain location) may be fixedly configured, and may be a specific symbol after sending the V2X service data, such as the last symbol in a timeslot for transmitting the V2X service, and is located after the corresponding V2X service data. The frequency domain resource (or frequency domain location) may be a frequency domain range for the V2X service (i.e., all Resource Blocks (RBs) for the V2X service), or may be consistent with a frequency domain location for the corresponding V2X service (i.e., occupy the same RBs as the corresponding V2X service), or may be adjacent to the frequency domain location of the corresponding V2X service. The code domain resource may be a code domain resource assigned by the gNB, or a pre-configured code domain resource. The code domain resource refers to codeword of a code adopted by the PSFCH, including a channel code and a scrambling code. The PSFCH channel code may adopt the same code as a Physical Sidelink Control Channel (PSCCH), such as a polar code, and if the content of the PSFCH is less, other simplified codes may also be adopted, such as a repetition code (1 bit), a Simplex code (2 bits), a Reed Muller (RM) code (3-11 bits). The scrambling code may adopt a codeword identified based on a destination (a destination UE or a multicast group). The specific code domain resource is configured by the gNB or pre-configured in the UE. For convenience of detection, the PSFCH needs to be scrambled, and the PSFCH may be scrambled with a specifically identified scrambling code to the receiving UE. The PSFCH employs the same Cyclic Prefix (CP) and Sub Carrier Space (SCS) as the corresponding V2X service. In the present disclosure, the PSFCH resource is used for transmitting the PSFCH content, and is a dedicated resource that is not shared with a PSCCH/Physical Sidelink Share Channel (PSSCH) resource pool.

In the present disclosure, the PC5 communication includes an intra-frequency mode and an inter-frequency mode. The intra-frequency mode refers to that Uu and PC5 share the same frequency, and the inter-frequency mode refers to that the PC5 communication adopts a dedicated frequency of an Intelligent Transport System (ITS), such as a V2X frequency of 5.9 GHz.

The PC5 refers to an interface between UEs, and may also be represented by other names (e.g., Sidelink). The PC5 interface may adopt a Prose technique for a licensed or unlicensed spectrum.

FIG. 4 is a flowchart of another information transmission method according to the present disclosure. In the present disclosure, there is provided an information transmission method that may be executed on the above mobile terminal 10. As shown in FIG. 4, the flow includes the following operations S402 to S404.

At operation S402, determining a PSFCH resource.

At operation S404, sending the PSFCH resource to a receiving UE for receiving a V2X message to instruct the receiving UE to send indication information on the PSFCH resource. The indication information is configured to indicate whether the receiving UE successfully receives the V2X message.

The subject performing the above operations may be a transmitting UE for sending the V2X message.

In the above embodiment, since the PSFCH resource for sending the indication information can be determined, and thus the indication information can be sent on the PSFCH resource, a design for the V2X response signal (i.e., the indication information) is realized, so that the requirement for PSFCH signal transmission is satisfied during transmission of the V2X service, reliability of the V2X service is improved, and the problem that no explicit scheme has been proposed regarding how to transmit the indication information in the related art is effectively solved.

In the present disclosure, the method further includes: determining information for indicating whether a PC5 feedback is activated; and notifying the receiving UE of the information for indicating whether the PC5 feedback is activated over PC5.

In the present disclosure, the operation of determining the PSFCH resource (i.e., operation 402) may include: determining a transmission mode of the transmitting UE for sending the V2X message; and determining the PSFCH resource using a determination method corresponding to the transmission mode.

In the present disclosure, the operation of determining the PSFCH resource using the determination method corresponding to the transmission mode includes at least one of: requesting, when the transmitting UE is in mode1, the PSFCH resource from a gNB, and acquiring the PSFCH resource configured by the gNB; or selecting, when the transmitting UE is in mode2, the PSFCH resource from a PSFCH resource pool.

In the present disclosure, the PSFCH resource includes: a time domain resource, a frequency domain resource, and a code domain resource.

In the present disclosure, the PSFCH resource includes at least one of: the time domain resource configured by a base station or the transmitting UE, i.e., a time interval between the indication information and the V2X message; the frequency domain resource including at least one of: a frequency domain resource consistent with a frequency domain resource for the V2X service corresponding to the V2X message, or a frequency domain resource adjacent to the frequency domain resource for the V2X service corresponding to the V2X message; or the code domain resource including at least one of: a code domain resource assigned by the gNB, or a pre-configured code domain resource.

The present disclosure will be described below with reference to specific examples.

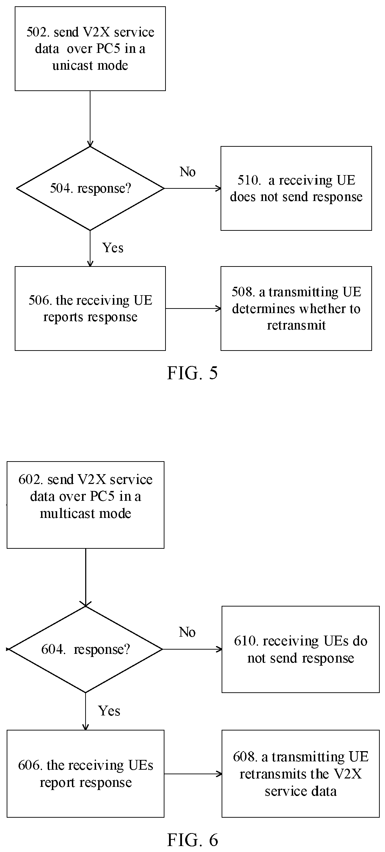

FIG. 5 is a schematic flowchart of a method according to the present disclosure. This example provides a method for sending PSFCH content in a unicast scenario. Referring to FIG. 5, the method includes operations 502 to 508.

At operation 502, a UE (i.e., a transmitting UE) sends V2X service data (i.e., a V2X message) over PC5 in a unicast mode.

The UE firstly acquires transmission resources, e.g., by the gNB (model) or by autonomous selection (mode2). The UE may acquire a retransmission resource while acquiring an initial transmission resource. The UE is a transmitting UE that establishes a unicast link with a receiving UE, sends V2X service resource indication information to the receiving UE, and sends V2X service data on the resources. If the transmitting UE has acquired the retransmission resource, the retransmission resource and the number of retransmissions are indicated to the receiving UE.

At operation 504, the receiving UE judges whether to send a response signal, and if so, turn to operation 506; otherwise, turn to operation 510.

The receiving UE determines whether to send a response signal (i.e., an indication signal) according to an activated state of PC5 feedback, and sends the response signal if the PC5 feedback is activated; otherwise, no response signal is sent. The activated state of the PC5 feedback may be acquired by one of: indicating by a gNB through a broadcast message; or indicating by the transmitting UE through PC5 signaling.

At operation 506, the receiving UE reports the response signal.

The PSFCH resource may be requested from the gNB by the transmitting UE and the resource location is notified to the receiving UE, or the transmitting UE may autonomously select a PSFCH resource location and notify the receiving UE of the selected PSFCH resource location.

The receiving UE receives the V2X service data according to the indication information from the transmitting UE. If the UE can decode correctly, an " acknowledgement" response is reported; otherwise, a "negative acknowledgement " response is reported. The report is sent over the PSFCH channel on the PC5 interface.

Optionally, the response signal may further include one of: a transmission process ID, a destination ID or a source ID.

Before sending the response signal, the receiving UE firstly acquires the PSFCH resource.

At operation 508, the transmitting UE determines whether to retransmit according to the response signal.

Upon receiving an acknowledgement response, the transmitting UE continues to send new V2X service data. Before sending the new V2X service data, the transmitting UE requests transmission resource for the new V2X service data. If the transmitting UE has acquired the retransmission resource, the UE sends indication information on releasing the retransmission resource, and the indication information may be sent to the gNB (model) or broadcasted over PC5.

Upon receiving a negative acknowledgement response, the transmitting UE retransmits the V2X service data over the PC5 interface. If the transmitting UE has acquired the PC5 retransmission resource, the V2X service data is retransmitted on the retransmission resource; otherwise, the UE firstly acquires the retransmission resource, e.g., through configuration by the gNB (mode1), or the UE autonomous selects the retransmission resource.

At operation 510, the receiving UE does not send the response signal.

If the PC5 feedback is inactivated, there is no need to send the PSFCH response signal.

FIG. 6 is a schematic flowchart of a method according to the present disclosure. This example provides a method for sending PSFCH content in a multicast scenario. Referring to FIG. 6, the method includes operations 602 to 608.

At operation 602, a transmitting UE sends V2X service data in a multicast mode.

The transmitting UE simultaneously sends the V2X service data to a plurality of receiving UEs in a groupcast mode. The multicast is similar to broadcast (also called "groupcast"), in which a plurality of receiving UEs join in a multicast group, the transmitting UE sends the V2X service data on a multicast common channel, and only UEs in the multicast group can receive the corresponding V2X service. Similar to unicast retransmission, the transmitting UE may acquire a multicast retransmission resource while acquiring a multicast initial transmission resources.

At operation 604, each of the receiving UEs judges whether to send a response signal, and if so, turn to operation 606; otherwise, turn to operation 610.

Each of the receiving UEs determines whether to send the response signal according to an activated state of PC5 feedback, and sends the response signal if the PC5 feedback is activated; otherwise, no response signal is sent.

It should be noted that if the receiving UE decodes the received V2X service data correctly, there is also no need to send a response signal.

At operation 606, the receiving UE sends a response signal.

More than one receiving UEs are provided, considering that the multicast transmission involves the same V2X service data, and as long as one receiving UE sends a negative acknowledgement response, the transmitting UE need to retransmit the V2X service data. Generally, the number of Nack signals is less than the number of Ack signals, so only the Nack response signal may be sent, i.e., a receiving UE that correctly receives the V2X service data may not send the response signal.

Optionally, the response signal may further include one of: a transmission process ID, a destination group ID or a source ID.

Before sending the response, the receiving UE needs to acquire the PSFCH resource.

At operation 608, the transmitting UE retransmits the V2X service data in a multicast mode.

The transmitting UE receives the negative acknowledgement response signal, which indicates that at least one of the receiving UEs does not correctly receive the V2X service data, and as long as the transmitting UE receives one negative acknowledgement response signal, detection on reception of other response signals may be stopped.

If the transmitting UE has acquired the retransmission resource, the V2X service data is retransmitted on the retransmission resource; otherwise, the transmitting UE acquires the retransmission resource, and indicates the retransmission resource to the receiving UEs and sends the V2X service data.

At operation 610, the receiving UE does not send the response signal.

If the PC5 feedback is inactivated, or the receiving UE correctly decodes the received V2X service data, no response signal is sent.

It should be noted that for the groupcast, if an Ack/Nack response needs to be sent, the receiving UE needs to send the Ack response when the PC5 feedback is activated and the receiving UE receives the V2X service data correctly.

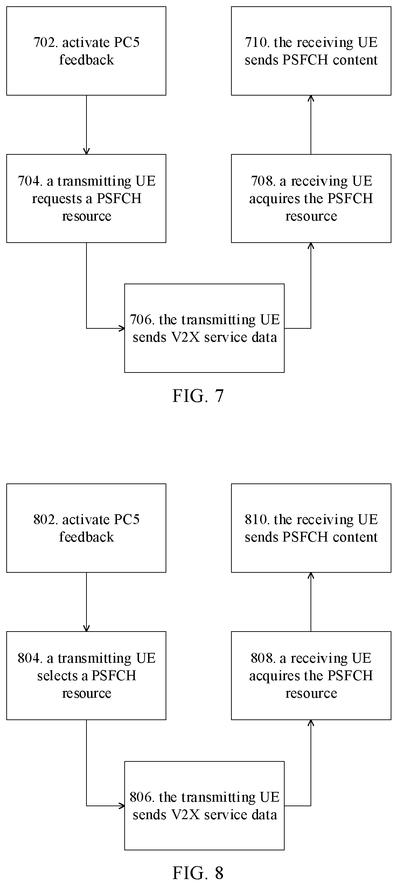

FIG. 7 is a schematic flowchart of a method according to the present disclosure. This example provides a method for configuring the PSFCH resource during transmission in mode1. Referring to FIG. 7, the method includes operations 702 to 710.

At operation 702, a gNB indicates activation of PC5 feedback.

The gNB determines to activate the PC5 feedback based on at least one of: a UE request, QoS of a V2X service or a PC5 link state. For example, when the UE request, the PC5 feedback and/or V2X service have high reliability requirements, and/or the PC5 link quality is poor, the gNB determines to activate the PC5 feedback. The gNB may send the indication through Downlink Control Information (DCI) signaling, Media Access Control (MAC) Control Element (CE) signaling, or Radio Resource Control (RRC) signaling.

At operation 704, a transmitting UE requests a V2X resource from the gNB.

The transmitting UE requests the resource from the gNB through RRC signaling, and the gNB indicates resource information to the UE through RRC signaling.

It should be noted that even if the transmitting UE does not request the gNB for a retransmission resource, the gNB may still configure initial transmission resource and retransmission resource at the same time and notify the transmitting UE.

Optionally, the V2X resource may further include a PSFCH resource.

At operation 706, the transmitting UE sends V2X service data.

The transmitting UE transmits a resource location through the PSCCH and sends the V2X service data on the resource through the PSSCH.

At operation 708, the receiving UE acquires the PSFCH resource.

The transmitting UE requests the PSFCH resource from the gNB, the gNB indicates the PSFCH resource to the transmitting UE, and the transmitting UE notifies the receiving UE of the obtained resource.

To reduce delay, the transmitting UE may send the PSFCH resource information while sending the V2X service in operation 706, e.g., indicate in Sidelink Control Information (SCI), and send it through PSCCH.

The PSFCH resource includes: a time domain resource, a frequency domain resource, and a code domain resource. The time domain resource may be determined by configuration, for example, by the last symbol in a V2X resource slot, which symbol is generally used for implementing transmitting-receiving switch, because the V2X transmission module is half-duplex, i.e., cannot perform transmitting and receiving at the same time, and needs a certain time to complete the transmitting-receiving switch. The frequency domain resource may include all RBs of the above symbol for the V2X service, or may occupy the same or adjacent RBs of the corresponding V2X service. The code domain resource may be configured by the gNB or pre-configured for channel coding or scrambling.

At operation 710, the receiving UE sends a response signal over the PSFCH.

The receiving UE sends the response signal according to the received V2X service data, and if the V2X service data is decoded correctly, an Ack response signal is sent; otherwise, a negative Nack response signal is sent.

FIG. 8 is a schematic flowchart of a method according to of the present disclosure. This example provides a method for determining the PSFCH resource during transmission in mode2. Referring to FIG. 8, the method includes operations 802 to 810.

At operation 802, activating PC5 feedback.

For an in-coverage (at least the transmitting UE is in coverage) scenario, similar to operation 702, the gNB determines to activate the PC5 feedback. For an out-of-coverage scenario, the transmitting UE determines to activate the PC5 feedback, and determines, according to the V2X service QoS requirement and/or the PC5 link state, whether to activate the PC5 feedback.

At operation 804, the transmitting UE selects a V2X resource.

Optionally, the transmitting UE selects a PSFCH resource.

The transmitting UE selects the PSFCH resource by one of: 1) selecting from a resource pool broadcasted by the gNB when the transmitting UE is in coverage; or 2) selecting from a resource pool pre-configured by the transmitting UE when the transmitting UE is out of coverage. The resource pool is dedicated to PSFCH.

At operation 806, the transmitting UE sends V2X service data.

Optionally, the transmitting UE may further send the PSFCH resource at the same time, for example, indicating the PSFCH resource through SCI and sending it through PSCCH.

At operation 808, the receiving UE acquires the PSFCH resource.

The receiving UE acquires the PSFCH resource by one of: 1) receiving resource indication information from the transmitting UE; 2) selecting, when the receiving UE is in coverage, the PSFCH resource from the resource pool broadcasted by the gNB; or 3) selecting, when the receiving UE is out of coverage, the PSFCH resource from a pre-configured resource pool stored in the receiving UE.

The PSFCH resource includes: a time domain resource, a frequency domain resource, and a code domain resource. The time domain resource may be determined by configuration, for example, by the last symbol in a V2X resource slot, which symbol is generally used for implementing transmitting-receiving switch, because the V2X transmission module is half-duplex, i.e., cannot perform transmitting and receiving at the same time, and needs a certain time to complete the transmitting-receiving switch. The frequency domain resource may include all RBs of the above symbol for the V2X service, or may occupy the same or adjacent RBs of the corresponding V2X service. The code domain resource may be configured by the gNB or pre-configured for channel coding or scrambling.

At operation 810, the receiving UE sends a response signal.

If the receiving UE acquires the PSFCH resource through the transmitting UE, PSFCH content is directly sent on the resource; and if the receiving UE itself selects the PSFCH resource, notifies the transmitting UE the resource location and transmits the PSFCH content.

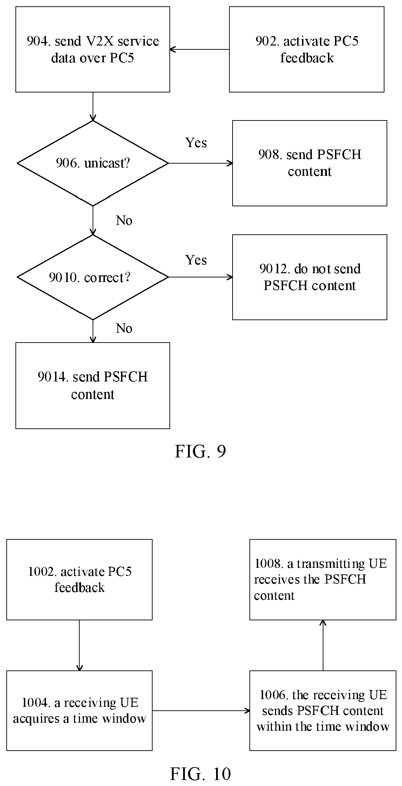

FIG. 9 is a schematic flowchart of a method according to the present disclosure. This example provides a method for setting PSFCH content by a receiving UE. Referring to FIG. 9, the method includes operations 902 to 914.

At operation 902, activating PC5 feedback.

This operation is similar to operation 802, and thus is not repeated.

At operation 904, the transmitting UE sends V2X service data.

At operation 906, the receiving UE determines whether the transmission is unicast transmission, and if so, turn to operation 908; otherwise, turn to operation 910.

At operation 908, the receiving UE sets and sends PSFCH content.

If the receiving UE can decode correctly, an Ack response is reported; otherwise, a Nack response is reported. The report is sent over the PSFCH channel on the PC5 interface.

Optionally, the response signal may further include one of: a transmission process ID, a destination ID or a source ID. The transmission process ID is used for distinguishing the transmission processes, because the response signal may be sent for many times, and the transmission process for each response signal needs to be distinguished. The destination ID and the source ID are each indicated by a layer2 ID.

Before sending the PSFCH, the receiving UE needs to acquire a resource location of the PSFCH.

At operation 9010, the receiving UE determines whether the V2X service data is correctly received, and if so, turn to operation 9012; otherwise, turn to operation 9014.

For multicast V2X transmission, the response signal may not be sent if the V2X service data is received correctly; otherwise, the response signal is sent.

At operation 9012, the receiving UE does not send the response signal.

At operation 9014, the receiving UE sends the response signal.

The response signal is negative acknowledgement. Optionally, the response signal may further include one of: a transmission process ID, a destination ID or a source ID. The transmission process ID is used for distinguishing the transmission processes, because the response signal may be sent for many times, and the transmission process for each response signal needs to be distinguished. The destination ID and the source ID are each indicated by a layer2 ID.

FIG. 10 is a schematic flowchart of a method according to the present disclosure. This example provides a method for setting a PSFCH time window. Referring to FIG. 10, the method includes operations 1002 to 1008.

At operation 1002, activating PC5 feedback.

Whether to activate/deactivate the PC5 feedback is determined according to at least one of: the QoS requirement of the V2X service to be sent, the PC5 link state or the PC5 feedback state. The PC5 feedback state includes activated or inactivated. If the PC5 feedback is activated, it may remain activated or may be deactivated; and if the PC5 feedback is inactivated, it may be activated or remain inactivated. The activation is determined by the gNB (in-coverage) or the transmitting UE (out-of-coverage).

At operation 1004, the receiving UE acquires a PSFCH time window.

The PSFCH time window is set through one of: 1) the gNB notifying a plurality of time window values through broadcasting, and the transmitting UE selecting one value and notifying the receiving UE; or 2) being pre-configured in the transmitting UE, and the transmitting UE selecting one value and notifying the receiving UE.

The transmitting UE may notify the receiving UE through SCI signaling, MAC CE signaling, or RRC signaling.

The selection of the PSFCH time window needs to consider a delay requirement of the V2X service, e.g., a relatively short time window for a low delay V2X service.

At operation 1006, the receiving UE sends PSFCH content within the time window.

In order to improve reliability, if there are multiple PSFCH transmission opportunities within a time window, the receiving UE may send the PSFCH content for multiple times within the time window, and the PSFCH resource for the multiple transmissions is determined in advance. The PSFCH content in the multiple transmissions remain consistent within the time window. When the time window expires, the receiving UE stops transmission of the PSFCH content. Assuming that the receiving UE starts to send the PSFCH content at time t1, a timer T with a length of the time window value is started at the same time. For unicast transmission, if the PSFCH content is transmitted only once, the timer T is stopped after the PSFCH content is sent; otherwise, the PSFCH content is transmitted for multiple times before the timer T expires. For multicast transmission, the timer T is stopped after the V2X service data is correctly received. If the V2X service data is not correctly received, the receiving UE stops the timer T after sending a negative acknowledgement, and if there are multiple transmission opportunities and resources, the negative acknowledgement may be sent for multiple times before the timer T expires.

At operation 1008, the transmitting UE receives the PSFCH content within the time window.

Suppose that the transmitting UE sends the V2X service data at time t0, the receiving UE starts to send the PSFCH content after t0 + Tgap, where Tgap represents the configured interval time for sending the PSFCH content, then the transmitting UE starts timer T having a length of the configured time window value at time t0 + Tgap, and if the transmitting UE receives the PSFCH content before t0+ Tgap + T, the timer T is stopped. If the timer T expires but the PSFCH content is not received, for unicast transmission, it is considered that the transmission by the transmitting UE is failed, and thus the corresponding V2X service data is retransmitted or discarded (according to the time delay requirement of the V2X service data); and for multicast transmission, it is considered that the transmission by the transmitting UE is successful.

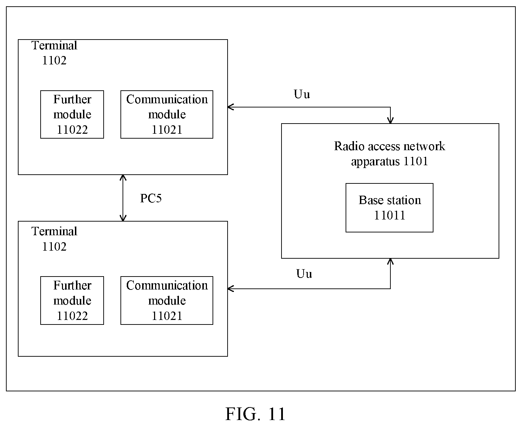

The present disclosure provides a system for transmitting a response signal. Referring to FIG. 11, the system includes a radio access network apparatus 1101 and a terminal 1102. The radio access network apparatus 1101 includes a base station 11011. The terminal 1102 includes a communication module 11021 and a further module 11022. The communication module 11021 is configured to receive PSFCH resource information sent from or pre-configured by the base station 11011 or the further module 11022, and receive a PSFCH signal. The communication module 11021 of the terminal 1102 is further configured to determine the PSFCH time window, the PSFCH resource, and the PSFCH content. The communication module 11021 of the terminal 1102 is further configured to send a PSFCH signal, PSFCH resource indication information, and PSFCH resource request information and time window information. The further module 11022 includes: a power module, a radio frequency module, a baseband module, a display module, an audio/video module, a navigation module, a storage module, etc. for implementing functions related to V2X communication. The base station 11011 is configured to send the PSFCH resource configuration information and the time window information to the terminal 1102, and receive the PSFCH resource request information.

In the present disclosure, the terminal apparatus configures the PSFCH content according to the data received over PC5 interface, determines a sending location of the PSFCH content according to the gNB indication or pre-configured rules, and transmits the PSFCH information at the location. The access network device 1101 is a base station, including one of: an eNB or a gNB. The access network device 1101 is mainly responsible for configuring the PSFCH resource for the terminal 1102 and notifying the terminal 1102 of the PSFCH resource.

Through the description of the above implementations, those skilled in the art can clearly understand that the method according to the above embodiment may be implemented by means of software plus a necessary general hardware platform. Obviously, it may also be implemented by hardware, but in most cases, the former is preferable. Based on such understanding, the technical solutions of the present invention essentially or, in other words, a part thereof contributing to the prior art, can be embodied in a form of a software product, wherein the software product is stored in a storage medium (such as an ROM/RAM, a disk, or an optical disc) and includes a number of instructions to make a terminal device (which may be a mobile phone, a computer, a server, or a network device, etc.) to execute the methods of the various embodiments of the present disclosure.

This embodiment further provides an information transmission apparatus configured to implement the above embodiments and implementations. Details which have been explained will not be repeated here. As used herein, the term "module" may be a combination of software and/or hardware that can realize a preset function. The apparatus described in the following embodiments is preferably implemented in software, but hardware, or a combination of software and hardware, is also possible and contemplated.

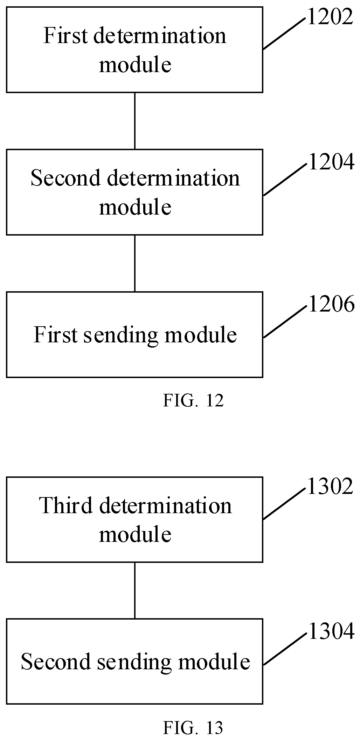

FIG. 12 is a block diagram of an information transmission apparatus according to the present disclosure. As shown in FIG. 12, the apparatus includes a first determination module 1202, a second determination module 1204, and a first sending module 1206.

The first determination module 1202 is configured to determine indication information for indicating whether a receiving UE successfully receives a V2X message and a sending mode of the indication information. The second determination module 1204 is configured to determine a PSFCH resource for sending the indication information. The first sending module 1206 is configured to send the indication information on the PSFCH resource in the sending mode.

In the present disclosure, the first determination module 1202 may determine indication information for indicating whether the receiving UE successfully receives the V2X message and the sending mode of the indication information by: determining a decoding state of the V2X, the transmission mode of the V2X and a feedback state of PC5; and determining, based on the decoding state of the V2X, the transmission mode of the V2X and the feedback state of PC5, the indication information for indicating whether the receiving UE successfully receives the V2X message and the sending mode of the indication information.

In the present disclosure, the first determination module 1202 may determine, based on the decoding state of the V2X, the indication information for indicating whether the receiving UE successfully receives the V2X message, by: determining, when the decoding state of the V2X is correct decoding, the indication information to be an Ack response; and determining, when the decoding state of the V2X is not correct decoding, the indication information to be an Nack response.

In the present disclosure, the first determination module 1202 may determine, based on the transmission mode of the V2X, the sending mode of the indication information for indicating whether the receiving UE successfully receives the V2X message by: determining, when the transmission mode of the V2X is unicast transmission, that the sending mode of the indication information includes sending, when the indication information is an Ack response, the Ack response to the transmitting UE, and sending, when the indication information is an Nack response, the Nack response to the transmitting UE; and sending, when the transmission mode of V2X is groupcast transmission and when the indication information is the Nack response, the Nack response to the transmitting UE.

In the present disclosure, the first determination module 1202 may determine, based on the PC5 feedback state, the sending mode of the indication information for indicating whether the receiving UE successfully receives the V2X message by: executing, when the PC5 feedback state is an activated state, determination of the sending mode of the indication information for indicating whether the receiving UE successfully receives the V2X message.

In the present disclosure, the first determination module 1202 may determine, based on the transmission mode of the V2X, the sending mode of the indication information for indicating whether the receiving UE successfully receives the V2X message by: determining, when the transmission mode of the V2X is groupcast transmission, that the sending mode of the indication information includes sending, when the indication information is the Ack response, the Ack response to the transmitting UE, and sending, when the indication information is the Nack response, the Nack response to the transmitting UE.

In the present disclosure, the first sending module 1206 may send the indication information on the PSFCH resource in the sending mode by: sending on the PSFCH resource in the sending mode the indication information and at least one of: a process ID indicating an order of the V2X message being transmitted over a PC5 interface; an ID of the transmitting UE for sending the V2X message; or an ID of the receiving UE.

In the present disclosure, the first sending module 1206 may send the indication information on the PSFCH resource in the sending mode by: configuring a transmission timer for the indication information, and sending the indication information before the timer expires and when the PSFCH resource exists.

In the present disclosure, the second determination module 1204 may determine the PSFCH resource for sending the indication information by at least one of: acquiring a PSFCH resource indicated by the transmitting UE for sending the V2X message; acquiring a PSFCH resource configured by a base station; selecting a PSFCH resource from a resource pool broadcasted by a 5G base station gNB; or selecting a PSFCH resource from a pre-configured resource pool.

In the present disclosure, the PSFCH resource includes resources with the same frequency domain and code domain configured on the same time interval, and the PSFCH resource is located in the same resource pool as a resource for the V2X service corresponding to the V2X message.

In the present disclosure, the first sending module 1206 may send the indication information on the PSFCH resource in the sending mode by: judging whether the feedback state of the PC5 is an activated state; sending, when the feedback state of the PC5 is the activated state, the indication information on the PSFCH resource in the sending mode; and stopping, when the feedback state of the PC5 is the inactivated state, the processing of sending the indication information on the PSFCH resource in the sending mode.

In the present disclosure, the apparatus determines whether the PC5 feedback is activated by at least one of: determining information, which is notified by the transmitting UE for sending the V2X message over PC5, for indicating whether the PC5 feedback is activated; receiving a first broadcast message from a gNB, and determining information, which is carried in the first broadcast message, for indicating whether the PC5 feedback is activated; or determining information, according to a state of a PSFCH resource pool, for indicating whether the PC5 feedback is activated.

In the present disclosure, the first sending module 1206 may send the indication information on the PSFCH resource in the sending mode by: determining a time interval for sending the V2X message and the indication information; and sending the indication information on the PSFCH resource according to the time interval in the sending mode.

In the present disclosure, the first sending module 1206 may determine a time interval for sending the V2X message and the indication information by: determining a pre-configured time interval; or receiving a second broadcast message from the gNB, and acquiring the time interval carried in the second broadcast message.

In the present disclosure, the first sending module 1206 may send the indication information on the PSFCH resource according to the time interval in the sending mode by: sending the indication information on the PSFCH resource in the sending mode at least twice within the time interval.

In the present disclosure, the PSFCH resource includes: a time domain resource, a frequency domain resource, and a code domain resource.

In the present disclosure, the PSFCH resource includes at least one of: the time domain resource configured by a base station or the transmitting UE for sending the V2X message; the frequency domain resource including at least one of: a frequency domain resource consistent with a frequency domain resource for the V2X service corresponding to the V2X message, or a frequency domain resource adjacent to the frequency domain resource for the V2X service corresponding to the V2X message; or the code domain resource including at least one of: a code domain resource assigned by the gNB, or a pre-configured code domain resource.

FIG. 13 is a block diagram of another information transmission apparatus according to the present disclosure. As shown in FIG. 13, the apparatus includes a third determination module 1302, and a second sending module 1304.

The third determination module 1302 is configured to determine a PSFCH resource. The second sending module 1304 is configured to send the PSFCH resource to a receiving UE for receiving a V2X message to instruct the receiving UE to send indication information on the PSFCH resource. The indication information is configured to indicate whether the receiving UE successfully receives the V2X message.

In the present disclosure, the apparatus further determines information for indicating whether a PC5 feedback is activated, and notifies the receiving UE of the information for indicating whether the PC5 feedback is activated over PC5.

In the present disclosure, the third determination module 1302 may determine the PSFCH resource by: determining a transmission mode of the transmitting UE for sending the V2X message; and determining the PSFCH resource using a determination method corresponding to the transmission mode.

In the present disclosure, the third determination module 1302 may determine the PSFCH resource using the determination method corresponding to the transmission mode by at least one of: requesting, when the transmitting UE is in mode1, the PSFCH resource from a gNB, and acquiring the PSFCH resource configured by the gNB; or selecting, when the transmitting UE is in mode2, the PSFCH resource from a PSFCH resource pool.

In the present disclosure, the PSFCH resource includes: a time domain resource, a frequency domain resource, and a code domain resource.

In the present disclosure, the PSFCH resource includes at least one of: the time domain resource configured by a base station or the transmitting UE; the frequency domain resource including at least one of: a frequency domain resource consistent with a frequency domain resource for the V2X service corresponding to the V2X message, or a frequency domain resource adjacent to the frequency domain resource for the V2X service corresponding to the V2X message; or the code domain resource including at least one of: a code domain resource assigned by the gNB, or a pre-configured code domain resource.

It should be noted that each of the above modules may be implemented by software or hardware. For the latter, it may be implemented by, but are not limited to: the above modules all located in the same processor; or the above modules each located in different processors in any combination.

An embodiment of the present disclosure further provides a storage medium having a computer program stored thereon. The computer program, when executed by a processor, causes the processor to perform the information transmission method according to various embodiments of the present disclosure.

In the present disclosure, the storage medium may include, but is not limited to: a U disk, a read-only memory (ROM), a random access memory (RAM), a mobile hard disk, a disk or optical disk, and other media that can store a computer program.

An embodiment of the present disclosure further provides an electronic apparatus, including a memory and a processor. The memory has a computer program stored thereon, and the processor, when executing the computer program, performs the information transmission method according to various embodiments of the present disclosure.

The electronic apparatus may further include a transmission device and an input/output device. The transmission device is coupled to the processor, and the input/output device is coupled to the processor.

Specific examples in the present embodiment may refer to the examples described in the foregoing embodiments and alternative implementations, which will not be repeated in the present embodiment.

According to the embodiments of the present disclosure, the receiving UE sets the PSFCH response content, acquires the PSFCH resource, and sends a response signal over the PSFCH, thereby realizing a design for the V2X response signal, satisfying the requirements for PSFCH signal transmission during unicast and multicast transmissions of the V2X service, improving reliability of the V2X service, and further ensuring effective utilization of PC5 resources.

Obviously, a person skilled in the art would understand that the above modules and operations of the present disclosure can be realized by using a universal computing device, can be integrated in a single computing device or distributed on a network that consists of a plurality of computing devices,; and alternatively, they can be realized by using the executable program code of the computing device, so that they can be stored in a storage device and executed by the computing device, in some cases, can perform the shown or described operations in a sequence other than herein, or they are made into various integrated circuit modules respectively, or a plurality of modules or operations thereof are made into a single integrated circuit module, thus to be realized. In this way, the present disclosure is not restricted to any particular hardware and software combination.

Although the invention has been explained in relation to its preferred embodiment(s) as mentioned above, it is to be understood that many other possible modifications and variations can be made without departing from the scope of the present invention, which is defined by the claims.

## Claims

1. An information transmission method applied to a receiving User Equipment, UE, comprising:
determining (S302) indication information for indicating whether the receiving UE successfully receives a Vehicle to Everything, V2X, message and a sending mode of the indication information;
determining (S304) a Physical Sidelink Feedback Channel, PSFCH, resource for sending the indication information according to an instruction of a transmitting UE;
sending (S306) the indication information on the PSFCH resource in the sending mode; and
determining a retransmission resource according to the instruction of the transmitting UE,
wherein sending (S306) the indication information on the PSFCH resource in the sending mode comprises:
determining a time interval between sending the V2X message by the transmitting UE and sending the indication information by the receiving UE; and
sending the indication information on the PSFCH resource according to the time interval in the sending mode.

2. The method according to claim 1, wherein determining (S302) indication information for indicating whether the receiving UE successfully receives the V2X message and the sending mode of the indication information comprises:
determining a decoding state of the V2X, the transmission mode of the V2X and a feedback state of PC5; and
determining, based on the decoding state of the V2X, the transmission mode of the V2X and the feedback state of PC5, the indication information for indicating whether the receiving UE successfully receives the V2X message and the sending mode of the indication information.

3. The method according to claim 2, wherein determining, based on the decoding state of the V2X, the transmission mode of the V2X and the feedback state of PC5, the indication information for indicating whether the receiving UE successfully receives the V2X message and the sending mode of the indication information, comprises at least one of:
determining, based on the decoding state of the V2X, the indication information for indicating whether the receiving UE successfully receives the V2X message, determining, in response to the decoding state of the V2X being correct decoding, the indication information to be an acknowledgement, called Ack, response, and determining, in response to the decoding state of the V2X being not correct decoding, the indication information to be a negative acknowledgement, called Nack, response;
determining, based on the transmission mode of the V2X, the sending mode of the indication information for indicating whether the receiving UE successfully receives the V2X message, sending, in response to the transmission mode of the V2X being unicast transmission and in response to the indication information being the Ack response, the Ack response to the transmitting UE for sending the V2X message, and sending, in response to the indication information being the Nack response, the Nack response to the transmitting UE, and sending, in response to the transmission mode of V2X being groupcast transmission and in response to the indication information being the Nack response, the Nack response to the transmitting UE; or
determining, based on the PC5 feedback state, the sending mode of the indication information for indicating whether the receiving UE successfully receives the V2X message, and executing, in response to the PC5 feedback state being an activated state, determination of the sending mode of the indication information for indicating whether the receiving UE successfully receives the V2X message.

4. The method according to claim 3, wherein determining, based on the transmission mode of the V2X, the sending mode of the indication information for indicating whether the receiving UE successfully receives the V2X message comprises:
determining, in response to the transmission mode of the V2X being groupcast transmission, that the sending mode of the indication information comprises sending, in response to the indication information being the Ack response, the Ack response to the transmitting UE for sending the V2X message, and sending, in response to the indication information being the Nack response, the Nack response to the transmitting UE.

5. The method according to claim 1, wherein sending (S306) the indication information on the PSFCH resource in the sending mode comprises:
configuring a transmission timer for the indication information; and
sending the indication information before the timer expires and when the PSFCH resource exists.

6. The method according to claim 1, wherein determining (S304) the PSFCH resource for sending the indication information comprises at least one of:
acquiring the PSFCH resource indicated by the transmitting UE for sending the V2X message;
acquiring the PSFCH resource configured by a base station;
selecting the PSFCH resource from a resource pool broadcasted by a gNB; or
selecting the PSFCH resource from a pre-configured resource pool.

7. The method according to claim 1, wherein sending (S306) the indication information on the PSFCH resource in the sending mode comprises:
judging whether a feedback state of PC5 is an activated state;
sending, in response to the feedback state of the PC5 being the activated state, the indication information on the PSFCH resource in the sending mode; and
stopping, in response to the feedback state of the PC5 is the inactivated state, the processing of sending the indication information on the PSFCH resource in the sending mode.

8. An information transmission method applied to a transmitting User Equipment, UE, comprising:
determining (S402) a Physical Sidelink Feedback Channel, PSFCH, resource and determining a retransmission resource; and
sending (S404) the PSFCH resource to a receiving UE for receiving a Vehicle to Everything, V2X, message to instruct the receiving UE to send indication information on the PSFCH resource according to a time interval between sending the V2X message by the transmitting UE and sending the indication information by the receiving UE, and sending the retransmission resource to the receiving UE,
wherein the retransmission resource is used to retransmit a V2X message, and,
wherein the indication information is configured to indicate whether the receiving UE successfully receives the V2X message.

9. The method according to claim 8, further comprising
determining information for indicating whether a PC5 feedback is activated; and
notifying the receiving UE of the information for indicating whether the PC5 feedback is activated over PC5.

10. The method according to claim 8, wherein determining (S402) the PSFCH resource comprises:
determining a transmission mode of the transmitting UE for sending the V2X message; and
determining the PSFCH resource using a determination method corresponding to the transmission mode.

11. A storage medium storing a computer program thereon, wherein the computer program, when executed by a processor, causes the processor to perform the information transmission method according to any one of claims 1 to 10.

12. An electronic apparatus, comprising a memory and a processor, wherein the memory has a computer program stored thereon, and the processor, when executing the computer program, performs the information transmission method according to any one of claims 1 to 10.

## Patentansprüche

1. Verfahren zur Informationsübertragung, das auf ein empfangendes Benutzergerät, UE, angewandt wird, umfassend:
Bestimmen (S302) von Indikationsinformation zum Angeben, ob das empfangende UE eine Fahrzeug-zu-Allem-, V2X-, Nachricht erfolgreich empfängt, und eines Sendemodus der Indikationsinformation;
Bestimmen (S304) einer physikalischen Seitenverbindungsrückmeldungskanal-, PSFCH-, Ressource zum Senden der Indikationsinformation gemäß einer Anweisung eines übertragenden UE;
Senden (S306) der Indikationsinformation auf der PSFCH-Ressource im Sendemodus; und
Bestimmen einer Neuübertragungsressource gemäß der Anweisung des übertragenden UE,
wobei das Senden (S306) der Indikationsinformation auf der PSFCH-Ressource im Sendemodus umfasst:
Bestimmen eines Zeitintervalls zwischen dem Senden der V2X-Nachricht durch das übertragende UE und dem Senden der Indikationsinformation durch das empfangende UE; und
Senden der Indikationsinformation auf der PSFCH-Ressource gemäß dem Zeitintervall im Sendemodus.

2. Verfahren nach Anspruch 1, wobei das Bestimmen (S302) von Indikationsinformation zum Angeben, ob das empfangende UE die V2X-Nachricht erfolgreich empfängt, und des Sendemodus der Indikationsinformation umfasst:
Bestimmen eines Decodierungszustands der V2X, des Übertragungsmodus der V2X und eines Rückmeldungszustands von PC5; und
Bestimmen, auf Basis des Decodierungszustands der V2X, des Übertragungsmodus der V2X und des Rückmeldungszustands von PC5, der Indikationsinformation zum Angeben, ob das empfangende UE die V2X-Nachricht erfolgreich empfängt, und des Sendemodus der Indikationsinformation.

3. Verfahren nach Anspruch 2, wobei das Bestimmen, auf Basis des Decodierungszustands der V2X, des Übertragungsmodus der V2X und des Rückmeldungszustands von PC5, der Indikationsinformation zum Angeben, ob das empfangende UE die V2X-Nachricht erfolgreich empfängt, und des Sendemodus der Indikationsinformation mindestens eines umfasst von:
Bestimmen, auf Basis des Decodierungszustands der V2X, der Indikationsinformation zum Angeben, ob das empfangende UE die V2X-Nachricht erfolgreich empfängt, Bestimmen, als Reaktion darauf, dass der Decodierungszustand der V2X eine korrekte Decodierung ist, dass die Indikationsinformation eine Bestätigungs-, Ack-Antwort genannt, ist, und Bestimmen, als Reaktion darauf, dass der Decodierungszustand der V2X keine korrekte Decodierung ist, dass die Indikationsinformation eine negative Bestätigung-, Nack-Antwort genannt, ist;
Bestimmen, auf Basis des Übertragungsmodus der V2X, des Sendemodus der Indikationsinformation zum Angeben, ob das empfangende UE die V2X-Nachricht erfolgreich empfängt, Senden, als Reaktion darauf, dass der Übertragungsmodus der V2X eine Unicast-Übertragung ist, und als Reaktion darauf, dass die Indikationsinformation die Ack-Antwort ist, der Ack-Antwort an das übertragende UE zum Senden der V2X-Nachricht, und Senden, als Reaktion darauf, dass die Indikationsinformation die Nack-Antwort ist, der Nack-Antwort an das übertragende UE, und Senden, als Reaktion darauf, dass der Übertragungsmodus der V2X eine Gruppencast-Übertragung ist, und als Reaktion darauf, dass die Indikationsinformation die Nack-Antwort ist, der Nack-Antwort an das übertragende UE; oder
Bestimmen, auf Basis des PC5-Rückmeldungszustands, des Sendemodus der Indikationsinformation zum Angeben, ob das empfangende UE die V2X-Nachricht erfolgreich empfängt, und Ausführen, als Reaktion darauf, dass der PC5-Rückmeldungszustand ein aktivierter Zustand ist, der Bestimmung des Sendemodus der Indikationsinformation zum Angeben, ob das empfangende UE die V2X-Nachricht erfolgreich empfängt.

4. Verfahren nach Anspruch 3, wobei das Bestimmen, auf Basis des Übertragungsmodus der V2X, des Sendemodus der Indikationsinformation zum Angeben, ob das empfangende UE die V2X-Nachricht erfolgreich empfängt, umfasst:
Bestimmen, als Reaktion darauf, dass der Übertragungsmodus der V2X eine Gruppencast-Übertragung ist, dass der Sendemodus der Indikationsinformation das Senden, als Reaktion darauf, dass die Indikationsinformation die Ack-Antwort ist, der Ack-Antwort an das übertragende UE zum Senden der V2X-Nachricht, und das Senden, als Reaktion darauf, dass die Indikationsinformation die Nack-Antwort ist, der Nack-Antwort an das übertragende UE umfasst.

5. Verfahren nach Anspruch 1, wobei das Senden (S306) der Indikationsinformation auf der PSFCH-Ressource im Sendemodus umfasst:
Konfigurieren eines Übertragungszeitgebers für die Indikationsinformation; und
Senden der Indikationsinformation, bevor der Zeitgeber abläuft und wenn die PSFCH-Ressource vorhanden ist.

6. Verfahren nach Anspruch 1, wobei das Bestimmen (S304) der PSFCH-Ressource zum Senden der Indikationsinformation mindestens eines umfasst von:
Erfassen der PSFCH-Ressource, die durch das übertragende UE zum Senden der V2X-Nachricht angegeben wird;
Erfassen der PSFCH-Ressource, die durch eine Basisstation konfiguriert wird;
Auswählen der PSFCH-Ressource aus einem Ressourcenpool, der durch einen gNB übertragen wird; oder
Auswählen der PSFCH-Ressource aus einem vorkonfigurierten Ressourcenpool.

7. Verfahren nach Anspruch 1, wobei das Senden (S306) der Indikationsinformation auf der PSFCH-Ressource im Sendemodus umfasst:
Beurteilen, ob ein Rückmeldungszustand von PC5 ein aktivierter Zustand ist;
Senden, als Reaktion darauf, dass der Rückmeldungszustand des PC5 der aktivierte Zustand ist, der Indikationsinformation auf der PSFCH-Ressource im Sendemodus; und
Stoppen, als Reaktion darauf, dass der Rückmeldungszustand des PC5 der inaktivierte Zustand ist, des Verarbeitens des Sendens der Indikationsinformation auf der PSFCH-Ressource im Sendemodus.

8. Verfahren zur Informationsübertragung, das auf ein übertragendes Benutzergerät, UE, angewandt wird, umfassend:
Bestimmen (S402) einer physikalischen Seitenverbindungsrückmeldungskanal-, PSFCH-, Ressource und Bestimmen einer Neuübertragungsressource; und
Senden (S404) der PSFCH-Ressource an ein empfangendes UE zum Empfangen einer Fahrzeug-zu-Allem-, V2X-, Nachricht, um das empfangende UE anzuweisen, Indikationsinformation auf der PSFCH-Ressource gemäß einem Zeitintervall zwischen dem Senden der V2X-Nachricht durch das übertragende UE und dem Senden der Indikationsinformation durch das empfangende UE zu senden, und Senden der Neuübertragungsressource an das empfangende UE,
wobei die Neuübertragungsressource verwendet wird, um eine V2X-Nachricht neu zu übertragen, und
wobei die Indikationsinformation konfiguriert ist, um anzugeben, ob das empfangende UE die V2X-Nachricht erfolgreich empfängt.

9. Verfahren nach Anspruch 8, ferner umfassend
Bestimmen von Information zum Angeben, ob eine PC5-Rückmeldung aktiviert ist; und
Benachrichtigen des empfangenden UE über die Information zum Angeben, ob die PC5-Rückmeldung über PC5 aktiviert ist.

10. Verfahren nach Anspruch 8, wobei das Bestimmen (S402) der PSFCH-Ressource umfasst:
Bestimmen eines Übertragungsmodus des übertragenden UE zum Senden der V2X-Nachricht; und
Bestimmen der PSFCH-Ressource unter Verwenden eines Bestimmungsverfahrens, das dem Übertragungsmodus entspricht.

11. Speichermedium zum Speichern eines Computerprogramms darauf, wobei das Computerprogramm, wenn es von einem Prozessor ausgeführt wird, den Prozessor veranlasst, das Verfahren zur Informationsübertragung nach einem der Ansprüche 1 bis 10 durchzuführen.

12. Elektronische Vorrichtung, umfassend einen Speicher und einen Prozessor, wobei der Speicher ein darauf gespeichertes Computerprogramm aufweist und der Prozessor, wenn er das Computerprogramm ausführt, das Verfahren zur Informationsübertragung nach einem der Ansprüche 1 bis 10 durchführt.

## Revendications

1. Procédé de transmission d'informations appliqué à un équipement utilisateur, UE, récepteur, comprenant les étapes consistant à :
déterminer (S302) des informations d'indication pour indiquer si l'UE récepteur reçoit avec succès un message de véhicule à tout, V2X, et un mode de transmission des informations d'indication ;
déterminer (S304) une ressource de canal de rétroaction de liaison latérale physique, PSFCH, pour envoyer les informations d'indication en fonction d'une instruction d'un UE émetteur ;
envoyer (S306) les informations d'indication sur la ressource PSFCH dans le mode de transmission ; et
déterminer une ressource de retransmission en fonction de l'instruction de l'UE émetteur,
dans lequel envoyer (S306) des informations d'indication sur la ressource PSFCH dans le mode de transmission comprend les étapes consistant à :
déterminer un intervalle de temps entre transmettre le message V2X par l'UE émetteur et transmettre les informations d'indication par l'UE récepteur ; et
envoyer les informations d'indication sur la ressource PSFCH en fonction de l'intervalle de temps dans le mode de transmission.

2. Procédé selon la revendication 1, dans lequel déterminer (S302) des informations d'indication pour indiquer si l'UE récepteur reçoit avec succès le message V2X et le mode de transmission des informations d'indication comprend les étapes consistant à :
déterminer un état de décodage du V2X, le mode de transmission du V2X et un état de rétroaction de PC5 ; et
déterminer, sur la base de l'état de décodage du V2X, du mode de transmission du V2X et de l'état de rétroaction de PC5, les informations d'indication pour indiquer si l'UE récepteur reçoit avec succès le message V2X et le mode de transmission des informations d'indication.

3. Procédé selon la revendication 2, dans lequel déterminer, sur la base de l'état de décodage du V2X, du mode de transmission du V2X et de l'état de rétroaction de PC5, les informations d'indication pour indiquer si l'UE récepteur reçoit avec succès le message V2X et le mode de transmission des informations d'indication, comprend au moins l'une des étapes consistant à :
déterminer, sur la base de l'état de décodage du V2X, des informations d'indication pour indiquer si l'UE récepteur reçoit avec succès le message V2X, déterminer, en réponse au fait que l'état de décodage du V2X est un décodage correct, que les informations d'indication sont une réponse d'accusé, appelé Ack, et déterminer, en réponse au fait que l'état de décodage du V2X n'est pas un décodage correct, que les informations d'indication sont une réponse d'accusé négatif, appelé Nack ;
déterminer, sur la base du mode de transmission du V2X, du mode de transmission des informations d'indication pour indiquer si l'UE récepteur reçoit avec succès le message V2X, transmettre, en réponse au fait que le mode de transmission du V2X est une transmission unicast et en réponse au fait que les informations d'indication sont la réponse Ack, la réponse Ack à l'UE émetteur pour transmettre le message V2X, et transmettre, en réponse au fait que les informations d'indication sont la réponse Nack, la réponse Nack à l'UE émetteur, et transmettre, en réponse au fait que le mode de transmission du V2X est une transmission groupcast et en réponse au fait que les informations d'indication sont la réponse Nack, la réponse Nack à l'UE émetteur ; ou
déterminer, sur la base de l'état de rétroaction de PC5, le mode de transmission des informations d'indication pour indiquer si l'UE récepteur reçoit avec succès le message V2X, et exécuter, en réponse au fait que l'état de rétroaction de PC5 est un état activé, la détermination du mode de transmission des informations d'indication pour indiquer si l'UE récepteur reçoit avec succès le message V2X.

4. Procédé selon la revendication 3, dans lequel déterminer, sur la base du mode de transmission du V2X, le mode de transmission des informations d'indication pour indiquer si l'UE récepteur reçoit avec succès le message V2X comprend les étapes consistant à :
déterminer, en réponse au fait que le mode de transmission du V2X est une transmission groupcast, que le mode de transmission des informations d'indication comprend de transmettre, en réponse au fait que les informations d'indication sont la réponse Ack, la réponse Ack à l'UE émetteur pour transmettre le message V2X, et transmettre, en réponse au fait que les informations d'indication sont la réponse Nack, la réponse Nack à l'UE émetteur.

5. Procédé selon la revendication 1, dans lequel envoyer (S306) les informations d'indication sur la ressource PSFCH dans le mode de transmission comprend les étapes consistant à :
configurer un temporisateur de transmission pour les informations d'indication ; et
transmettre les informations d'indication avant que le temporisateur expire et lorsque la ressource PSFCH existe.

6. Procédé selon la revendication 1, dans lequel déterminer (S304) la ressource PSFCH pour envoyer les informations d'indication comprend au moins l'une des étapes consistant à :
acquérir la ressource PSFCH indiquée par l'UE émetteur pour transmettre le message V2X ;
acquérir la ressource PSFCH configurée par une station de base ;
sélectionner la ressource PSFCH à partir d'un groupe de ressources diffusé par un gNB ; ou
sélectionner la ressource PSFCH à partir d'un groupe de ressources préconfiguré.

7. Procédé selon la revendication 1, dans lequel envoyer (S306) les informations d'indication sur la ressource PSFCH dans le mode de transmission comprend les étapes consistant à :
juger si un état de rétroaction de PC5 est un état activé ;
envoyer, en réponse au fait que l'état de rétroaction de PC5 est l'état activé, les informations d'indication sur la ressource PSFCH dans le mode de transmission ; et
arrêter, en réponse au fait que l'état de rétroaction de PC5 est l'état inactivé, le traitement de transmission des informations d'indication sur la ressource PSFCH dans le mode de transmission.

8. Procédé de transmission d'informations appliqué à un équipement utilisateur, UE, émetteur, comprenant les étapes consistant à :
déterminer (S402) une ressource de canal de rétroaction de liaison latérale physique, PSFCH, et déterminer une ressource de retransmission ; et
transmettre (S404) la ressource PSFCH à un UE récepteur pour recevoir un message de véhicule à tout, V2X, pour ordonner à l'UE récepteur de transmettre des informations d'indication sur la ressource PSFCH en fonction d'un intervalle de temps entre transmettre le message V2X par l'UE émetteur et transmettre les informations d'indication par l'UE récepteur, et transmettre la ressource de retransmission à l'UE récepteur,
dans lequel la ressource de retransmission est utilisée pour retransmettre un message V2X, et
dans lequel les informations d'indication sont configurées pour indiquer si l'UE récepteur reçoit avec succès le message V2X.

9. Procédé selon la revendication 8, comprenant en outre les étapes consistant à
déterminer des informations pour indiquer si une rétroaction de PC5 est activée ; et
notifier à l'UE récepteur les informations pour indiquer si la rétroaction de PC5 est activée sur PC5.

10. Procédé selon la revendication 8, dans lequel déterminer (S402) la ressource PSFCH comprend les étapes consistant à :
déterminer un mode de transmission de l'UE émetteur pour transmettre le message V2X ; et
déterminer la ressource PSFCH en utilisant un procédé de détermination correspondant au mode de transmission.

11. Moyen de stockage sur lequel est stocké un programme informatique, dans lequel le programme informatique, lorsqu'il est exécuté par un processeur, amène le processeur à réaliser le procédé de transmission d'informations selon l'une quelconque des revendications 1 à 10.

12. Appareil électronique, comprenant une mémoire et un processeur, dans lequel la mémoire a un programme informatique stocké sur celle-ci, et le processeur, lorsqu'il exécute le programme informatique, réalise le procédé de transmission d'informations selon l'une quelconque des revendications 1 à 10.
